# EUROPEAN PATENT SPECIFICATION

(11) **EP 4 336 159 B1**
(45) Date of publication and mention of the grant of the patent: **04.11.2026**
(21) Application number: 22194966.2
(22) Date of filing: 09.09.2022
(51) Int. Cl.: G01L 1/18, G01K 7/20, G01L 1/20, G01L 5/22

(54) **TACTILE SENSOR TO ANALYSE A GIVEN MATERIAL, WITH ELECTRICAL IMPEDANCE TOMOGRAPHY (EIT)**
TAKTILER SENSOR ZUR ANALYSE EINES BESTIMMTEN MATERIALS MIT ELEKTRISCHER IMPEDANZTOMOGRAFIE (EIT)
CAPTEUR TACTILE POUR ANALYSER UN MATÉRIAU DONNÉ, AVEC TOMOGRAPHIE PAR IMPÉDANCE ÉLECTRIQUE (EIT)

(43) Date of publication of application: 13.03.2024
(73) Proprietor: CY Cergy Paris Université, 95000 Cergy (FR); Centre national de la recherche scientifique, 75016 Paris (FR); École Nationale Supérieure de l'Électronique et de ses Applications, 95800 Cergy (FR)
(72) Inventor: ABDELWAHED, Mehdi, 92700 Colombes (FR); PITTI, Alexandre, 92200 Neuilly-sur-Seine (FR); ROMAIN, Olivier, 91230 Montgeron (FR); ZERIOUL, Lounis, 95800 Cergy (FR)
(74) Representative: Jorget, Quentin

(56) References cited:
- EP-A1- 4 016 028

## Description

The invention relates to a tactile sensor for analysing the nature of a given material, with Electrical Impedance Tomography (EIT).

Combined with the visual and auditory senses and proprioception, artificial skins would provide additional sensory perception to robots and multiply their capabilities.

Several techniques have been proposed for which most of them are using isolated unitary devices that cover specified surface and for which each is reacting to a small receptive field.

With respect to vision and audition modalities, tactile modality is now considered to be an important feature to achieve in robots, in order to enable them with intelligent and adaptive behaviours like grasping an object or touching people.

Current tactile devices give touch location and sometimes pressure information. Also, some of them can provide temperature, but very few of them can give two or three modalities at the same time.

Having robots capable of developing such tactile capabilities with the extra possibility of an adaptive body image would provide them with human-like features of self-calibration (by learning the physical extents of the body), of robustness and adaptability (when dealing with unexpected changes in tasks or in the environment).

These sensors can replace steering wheel controls, which present a single sensor capable of managing gestures as commands for the vehicle.

**In** home automation also, this sensor could be part of a more complex network with other sensors to allow object identification. Thus, placing an object on this sensor with a camera and a scale will allow through an elaborate process to define exactly the object to better catalogue it in a connected refrigerator.

Several techniques are used to obtain tactile information, ranging from pressure sensors, optical sensors to acoustic sensors. Some of these techniques use an electrical signal to carry out touch information.

A promising method is the use of large conductive fabric sheets that reacts to electrical variations on its surface. Using inversion methods like Electrical Impedance Tomography (EIT), it is possible to reconstruct the spatial location on its surface. Compared to more classical methods, this technique is inexpensive in the design, allows to cover large surface portions, and allows to be nearest the design of the human-skin. However, this method does not provide a fast acquisition and does not use cheap reconstruction algorithms.

In older studies, Pugach, Pitti and their colleagues (Pugach et al., 2019 "Brain-Inspired Coding of Robot Body Schema Through Visuo-Motor Integration of Touched Events", Frontiers in Neurorobotics) could demonstrate the use of a flexible skin on a robotic arm and using EIT technology, this combination makes it possible to detect the position of the arm and to detect the contact.

The technical problem to solve is to find a tactile sensor which is able to identity more than one parameter attached to an object in contact with the tactile sensor. More precisely, the technical problem to solve is to precisely characterize an object in contact with the tactile sensor, comprising for example its position, its material, its pressure intensity onto the tactile sensor and/or its temperature.

Of course, such characterization should be achieved without sensor locative on the active surface of the tactile sensor.

According to a first aspect of the invention, at least one of the aforementioned objectives is achieved with a tactile sensor to multi-modal analyse of a given object, with Electrical Impedance Tomography, according to appended claim 1.

This invention uses the **IET** technology spectrum in a new way.

Having no priori on the object to be detected, the method uses a frequency band covering quite widely the frequencies used in **IET** to deduce the material put in contact.

Several simultaneous frequencies of electrical signals are used to characterize many parameters that characterized the object in contact with the object on the flexible film.

This invention makes no assumptions about the type of material that will be in contact and thus makes it possible to describe it. More precisely, the present invention makes it possible to detect and characterized non metallic objects in contact with the flexible film, thanks to multimodal analysis and the temperature that is firstly measured.

Indeed, a surprising effect of the invention related with its first aspect comes from the temperature measurement that is a first step for such global characterization: once the temperature of the object in contact with the flexible film is known, then it's possible, through the multimodal analysis, to interpret the signals and to characterize other parameters. In other words, once the temperature is known, and referring to some specific charts and specifications of the tactile sensor, it's possible to define pressure intensity and/or material and/or position.

By giving this modality, robots could behave differently when touching an egg versus touching metal. This invention uses advantageously available and affordable materials.

The invention presented is a tactile surface using a medium composed of a conductive polymer coupled to an Electrical Impedance Tomography process. This device makes it possible to reconstruct, locate and describe the type of touch performed on the tactile sensor. This last feature is distinctive from other tactile systems.

The tactile sensor according to the first aspect of the invention advantageously comprises at least one of the improvements below, the technical characteristics forming these improvements being able to be taken alone or in combination:
- the determination of the temperature is achieved through a first multifrequency analysis, said temperature being integrated in a second multifrequency analysis that considers the said determined temperature to analyse at least one element chosen in the following list comprising the nature of the given material, the position and the pressure intensity of the contact of the given material;
- elements analysed through multifrequency analysis are the temperature and the pressure intensity of the given object in order to deduce the given material of said given object.
- the multifrequency analysis of the temperature and pressure intensity of said object are used to calibrate the tactile sensor in a specific range that make it possible to discover the material of said given object.
- elements analysed through multifrequency analysis are the temperature and the material of said given object in order to deduce the pressure intensity of said given object on the flexible film .
- the multifrequency analysis of the temperature and the material of said object are used to calibrate the tactile sensor in a specific range that make it possible to discover the pressure intensity of said given object onto said flexible film.
- elements analysed through multifrequency analysis are the temperature and the pressure intensity of said given object on the flexible film and the position of said given object on the flexible film in order to deduce the material of said given object.
- the multifrequency analysis of the temperature and the pressure intensity and the position of said object are used to calibrate the tactile sensor in a specific range that make it possible to discover the material of said given object.
- elements analysed through multifrequency analysis are the temperature and the pressure intensity of said given object on the flexible film and the material of said given object in order to deduce the position of said given object onto the flexible film .
- the multifrequency analysis of the temperature and the pressure intensity and the material of said object are used to calibrate the tactile sensor in a specific range that make it possible to discover the position of said given object onto the flexible film .
- elements analysed through multifrequency analysis are the temperature and the position of said given object on the flexible film and the material of said given object in order to deduce the pressure intensity of said given object onto the flexible film
- the multifrequency analysis of the temperature and the position and the material of said object are used to calibrate the tactile sensor in a specific range that make it possible to discover the pressure intensity of said given object onto the flexible film .
- the microcontroller is configured to (i) select a first set two adjacent electrodes for stimulation whereas the other two adjacent electrodes are selected for measurements, during a first acquisition with several frequencies, then (ii) repeat with all two adjacent electrodes of the set selected as electrodes for stimulation, the said other two adjacent electrodes are selected for measurements, during other acquisitions which present each several frequencies.
- electrical signals generating means are configured to generate iteratively in the two adjacent electrodes for stimulation, sinusoidal alternative currents, each sinusoidal alternative current having one specific frequency.
- electrical signals generating means are configured to generate in the two adjacent electrodes for stimulation, several sinusoidal alternative currents at multiple frequencies.
- the frequency band of the electrical signals is from one kilohertz to several hundred kilos Hertz.
- the storage and computing means are configured to analyse by statistical calculation the measured conductivity distribution.
- the computing means are configured to process data with a Principal Component Analysis (PCA), to reduce the dimensionality of the data, and the reduced data are given to a K-means in order to retrieve clusters.
- the computing means having being trained by machine supervised learning and/or statistical methods for categorization from the Electrical Impedance Tomography realized with the same flexible film, at multiple frequencies with some training form or temperature of objects, the training form of an objects being in contact with the flexible film at a same temperature or at the same form than the given object.
- the electrodes are placed at equal distance from each other thus making the measurement homogeneous.
- the tactile sensor comprises calibrating means to normalize the conductivity distribution in regard to the form, the temperature of the given object on contact with the flexible film of piezo-resistive material.
- the computing means are configured to compute by multifrequency analysis the form and/or the temperature of the contact of the given object on the flexible film of piezo-resistive material.
- the storage and computing means are configured to determine the spectral profile of the given object. The spectral profile of the given object is the spectral response measured by the tactile sensor regarding the stimulation provided by the electrodes at several frequencies.

According to a second aspect of the invention, the present invention proposes a system having the tactile sensor according to the first aspect of the invention or regarding anyone of its improvements.

Advantageously, the system is a robot, a steering wheel, a haptic human-machine interface, prosthetic hands, a biometric detector for safety, wearable sensors for IoT (Internet of Things), physical monitoring or material defect characterization Various embodiments of the invention are provided, integrating, according to all of their possible combinations, the various optional features set out here.

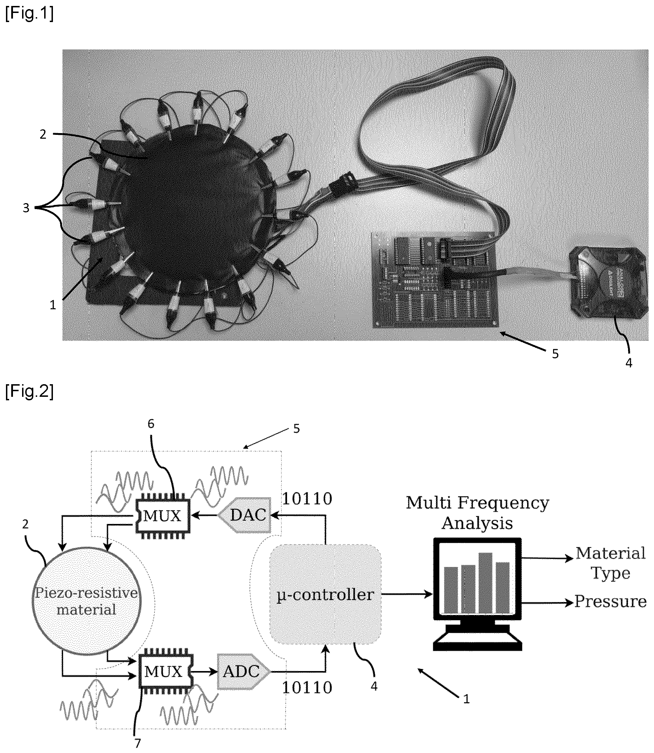

Other characteristics and advantages of the invention will become apparent through the description which follows on the one hand, and several examples of embodiment given by way of indication and not limitation with reference to the appended schematic drawings on the other hand., on which ones: [Fig.1] illustrates;
[Fig.1] represents an experimental set-up of the tactile sensor composed of a Velostat^{®} (flexible film), a Mux/VCCS (electronic unit/ Voltage Controlled Current Source) and a microcontroller;
[Fig.2] represents a schematic of the tactile sensor and information path;
[Fig.3] represents a schematic of a flexible film connected to electrodes and using the IET principle;
[Fig.4] represents a schematic of a flexible film connected to electrodes and a material in contact with the flexible film;
[Fig.5] represents the impedance response of the flexible film as a function of frequency in a graph;
[Fig.6] represents the impedance response of the flexible film for different frequencies for several materials;
[Fig.7] represents a graph showing the categorization of the type of contact on the tactile sensor, using no frequency with a purely constant signal (continuous). It is not possible to distinguish the metal, the plastic and the wood (between abscissa -1 and 0). Only the hand is apart (between abscissa 1 and 2);

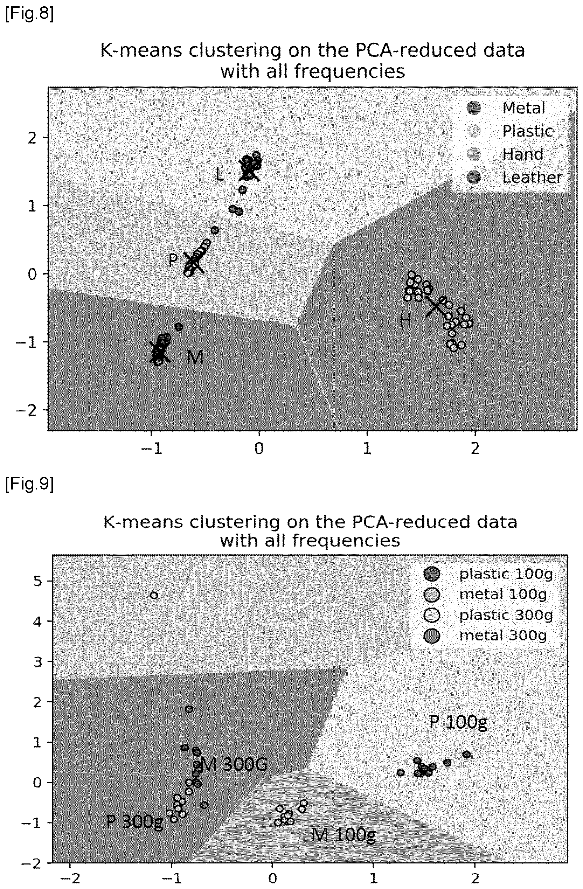

[Fig.8] represents a graph showing the categorization of the type of contact on the tactile sensor, using all frequencies. Depending on the location of the reconstruction, the contact has a certain type. Having a contact at the location of the type therefore tells us its type (hand, metal, plastic or leather). It is possible to distinguish the metal M (between ordinate -0,5 and -1,5 ; between abscissa -1 and -0,5), the plastic P (between ordinate -0,2 and 0,8 ; between abscissa -1 and -0,5), the leather L (between ordinate 0,8 and 1,8; between abscissa -0,5 and 0,2) and the hand H (between ordinate 0 and -1,8; between abscissa 1 and 2);
[Fig.9] represents a graph showing the categorization of the type and the pressure of contact on the tactile sensor, using all frequencies. Depending on the location of the reconstruction, the contact has a certain type (metal or plastic) and a certain pressure (100g or 300g). It is possible to distinguish the metal M 300g (between ordinate -1 and 2 ; between abscissa -1 and -0,7), the plastic P 300g (between ordinate -1 and 0 ; between abscissa -1 and -0,8), the metal M 100g (between ordinate -1 and 0; between abscissa 0 and 0,4) and the plastic P 100g (between ordinate 0.11 and 1; between abscissa 1,3 and 2,3);
[Fig.10] represents a graph showing the standard derivation of different material (hand, metal, leather and plastic) as a function of frequency;
[Fig.11] represents the center of cluster centroids for each frequency;
[Fig.12] represents the Calinski-Harabasz Index after PCA transform with one frequency.

Of course, the features, variants and different embodiments of the invention may be associated with each other, in various combinations, insofar as they are not mutually exclusive, and in so far as they fall within the scope of the appended claims.

In particular, all the variants and all the embodiments described can be combined with each other if nothing prevents this combination from a technical point of view, in so far as the combination falls within the scope of the appended claims.

In the figures, the elements common to several figures retain the same reference.

The invention relates to a tactile sensor 1 to multi-modal analyse of a given object, with Electrical Impedance Tomography (EIT), according to appended claim 1.

In order to recognize the elements that are representatives of the object's characteristics, the sensor 1 uses multi-frequency analysis (MFA). The temperature determination is fundamental for this multi-modal analysis, as it make it possible to determine, through a second time analysis, other elements chosen between the aforementioned characteristics.

The originality of the invention lies in the fact of using a spectrum of frequencies to identify the object in contact and not the medium itself. Indeed, most EIT methods are based on the premise of accurately recognizing a specific type of material. For this they use frequencies for which the response of the electrical signals is the strongest. This invention uses the reverse. Having no a priori on the object to be detected, the method uses a frequency band that includes at least partially the frequencies used in EIT to deduce the material brought into contact.

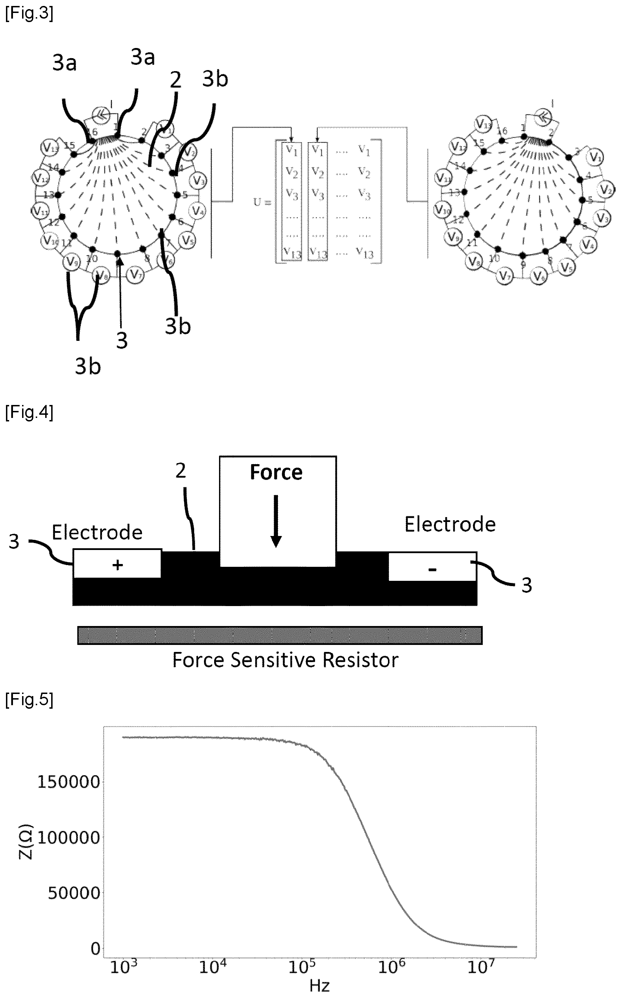

EIT uses the tensions at the edges of the flexible film 2 in order to reconstruct its conductivity distribution, as represented on figure 3. It may be used to show the conductivity of a particular plane (2D) or of an object (3D). For this purpose, the tactile sensor 1 injects a current through the flexible film 2 with electrodes 3.

Advantageously, when a physical contact is made, the location is reconstructed and the type of material is found thanks to the MFA, as represented on figure 4. To proceed the MFA, the tactile sensor 1 can perform for instance a frequency sweep, for instance from one kilohertz to several hundred kilos Hertz for generating sinusoidal signals.

For instance, the electronic unit 5 receives a voltage signal from the microcontroller 4 into a current signal. The current signal then passes through multiplexing 6 and demultiplexing means 7 (present in the electronic unit 5) which distributes the signal to the electrodes 3 (depending on the role of the electrodes 3), so that the frequency can be varied and the response of the material is recovered over the entire surface of the flexible film 2, as represented in figure 2.

These electrical signals come from an electronic board that generates, manages and returns electrical signals to the electronic unit 5. The electronic board is made up of a part managing the communication with the microcontroller 4, a part generating the electrical signals and a part managing the distribution of these signals to all the electrodes. The signals used for the electrodes are sinusoidal alternative currents of variable frequencies ranging from a few Hertz to 250 kHz. Those signals are converted into constant intensity: that is to say that the intensity does not vary if the voltage varies.

This step is essential because it allows the impedance (resistance) of the flexible film 2 to be measured. Knowing that the property of the flexible film 2 used is to change impedance according to the pressure exerted through a piezoresistive effect, the voltage is therefore measured all around the flexible film 2 thanks to the electrodes 3, 3a, 3b.

Two electrodes 3, 3a, 3b are used to pass an electric current through the flexible film 2, while two other electrodes 3, 3a, 3b measure the voltage of the flexible film 2.

This measurement is performed all around the flexible film 2 using all available electrodes 3, 3a, 3b except those used to inject the current into the flexible film 2. Once completed, two other electrodes 3, 3a, 3b are used to inject the current and the same measurement is made. The measurement step is finished when all the electrodes are used to inject the current into the flexible film 2.

The flexible film 2 constitutes the touch-sensitive part of the tactile sensor 1 and is a piezo-resistive material. When a material (an object or a person) touches it and deforms it, the internal resistance changes, thus changes its electrical impedance and thus its conductivity distribution, at one position on the flexible film 2 and for one given pressure.

Advantageously, the injected current in the flexible film 2 is controlled and has an intensity inferior to 10 mA. Thus, the intensity and the conductivity of the flexible film 2 are well defined and can be used with **EIT.**

Advantageously, the resistance of the flexible film 2 is comprised between 15 kOhm/sq cm and 45 kOhm/sq cm.

The flexible film 2 has an impedance of around 150 kΩ between 1 Hz and 100 kHz. Between 100 kHz and 1 MHz, the impedance decreases until reaching around 1 kΩ.

Advantageously, the frequency response of the flexible film 2 is comprised between 1 Hz and more than 100 kHz. The cut-off frequency is greater than 100 kHz.

The flexible film 2 can also modify the geometry of the tactile sensor 1 (possibility of being able to wind it on any 3D shape) while keeping its properties.

As a non limitative example, the flexible film 2 of piezo-resistive material can be chosen among: velostat^{®}, eeontex^{®}, linqstat^{®}, or other renowned flexible film.

Advantageously, the electrodes 3, 3a, 3b are placed at equal distance from each other, thus making the measurement homogeneous, along at its periphery, on the edges of the flexible film 2 or within. Moreover, the electrodes 3 can be placed in opposite side by pairs.

In another embodiment, each electrode 3 has its own current injection module.

Advantageously, during an acquisition, and as described therebefore, two electrodes 3a are used for stimulation, whereas the other electrodes 3b are used in pair for measurements.

As a non limitative example, the tactile sensor 1 comprises at least 16 electrodes 3, 3a, 3b located at the periphery of the flexible film 2. Of course, in the field of the invention, the more electrodes are embedded in the tactile sensor 1, the more precise it is for the determination of the aforementioned characteristic elements of the object in contact with the flexible film 2.

In the context of the invention, the microcontroller 4 can be configured to:
- select a first set two adjacent electrodes 3a for stimulation, whereas the other two adjacent electrodes 3b are selected for measurements, during a first acquisition with several frequencies, then
- repeat with all two adjacent electrodes 3a of the set, selected as electrodes for stimulation, all the other two adjacent electrodes 3b being selected for measurements, and so on during other acquisitions, each acquisition presenting several frequencies.

Advantageously, it is applied more than two frequencies at each acquisition.

The acquisition pattern is adjacent, which means that the electrodes sending the current are aside and the other electrodes measure the current with side-by-side electrodes. In a very interesting mode of realization, 16 electrodes are used, and a complete measurement pattern is composed of 13x16=208 values. The values represent the tension between a said couple of electrodes. The clustering given by the algorithm is retrieved and the data are labelled afterwards.

Advantageously, the signal generated by the microcontroller 4 is a source voltage. This signal therefore can have a voltage that varies between -1V and 1V sinusoidally at a certain frequency. It does not change amplitude depending on what is connected to it. This signal is converted into current: the signal remains a sinusoidal which this time does not change amplitude into current (and therefore the voltage can change amplitude, while keeping its sinus profile).

The electronic unit 5 manages the signals to be sent to the sensitive part and the communication with a control unit and is connected to the microcontroller 4 and can comprise communicating means with the microcontroller 4, and/or electrical signals generating means, and/or multiplexing 6 and demultiplexing means 7 connected to electrodes 3, 3a, 3b, and/or storage and computing means connected to the electrodes 3, 3a, 3b.

The electrical signals can be sinusoidal alternative currents, so as to realize Electrical Impedance Tomography (EIT) with multiple frequencies which are in a frequency band that includes at least partially a frequency response of the piezo-resistive flexible film 2.

The multiple frequencies can be applied simultaneously or iteratively, and the sinusoidal signals generated is converted into an equivalent current with a constant amplitude in the flexible film 2.

The electrical signals generating means can be configured :
- to generate iteratively in the two adjacent electrodes 3a for stimulation, sinusoidal alternative currents, each sinusoidal alternative current having one specific frequency, and/or
- to generate in the two adjacent electrodes 3a for stimulation, several sinusoidal alternative current at multiple frequencies.

The frequency band of the electrical signals is from one kilohertz to several hundred kilos Hertz.

The electrical signals generating means can be a Voltage Controlled Current Source (VCCS).

Advantageously, the multiplexing 6 and demultiplexing means 7 are connected to electrodes 3 and are configured to select: electrodes 3 for stimulation of the flexible film 2 with sinusoidal signals, and electrodes 3 for measurements the varying voltage in the flexible film 2 at each frequency of the frequency band.

The electrical signals generating means and the multiplexing 6 and demultiplexing means 7 can be controlled by the microcontroller 4.

Advantageously, the storage and computing means connected to the electrodes 3analyse by multifrequency analysis the material of the given object in contact with the flexible film 2, by the calculation of the conductivity distribution in the flexible film 2, at each frequency of the frequency band.

The storage and computing means are configured to compute the conductivity distribution in the flexible film 2, at each frequency of the frequency band, for at least two different pressures, at one position on the flexible film 2.

The storage and computing means can analyse by statistical calculation the measured conductivity distribution.

Advantageously, the computing means are configured to process data to a Principal Component Analysis (PCA), to reduce the dimensionality of the data, and the reduced data are given to a K-means in order to retrieve clusters.

The computing means are configured to compute by multifrequency analysis the position and/or the pressure intensity of the contact of the given material on the flexible film 2 of piezo-resistive material.

According to the invention as defined by the appended claims, the computing means are trained by machine supervised learning from the Electrical Impedance Tomography realized with the same flexible film 2 at multiple frequencies with some training materials among which the given material is, the training materials being in contact with the flexible film 2 at a same pressure and on the same area than the given material.

Statistical and learning methods supervised and unsupervised, for categorization such as deep learning, PCA, kNN, Naive Bayesian Classifier can be used.

The storage and computing means can be configured to determine the spectral profile of the given material. The spectral profile of the given material is the spectral response measured by the tactile sensor 1 regarding the stimulation provided by the electrodes at several frequencies.

The stimulation passing trough the flexible film 2 and electrical signals are measured at the edges. By having this measurement done each time for each electrode 3, 3a, 3b pair disposed side by side, the voltage distribution can be reconstructed. As explained before, the reconstruction consists of converting this measured voltage to a conductivity distribution.

The storage and computing means can be e.g., a computer, a tablet, a mobile phone.

Advantageously, the data retrieved from EIT can be processed with reconstruction algorithm. However, in order to retrieve the object type, reconstruction is not mandatory. Machine learning algorithms can be used to reconstruct the data from EIT.

According to the invention as defined by the appended claims, the tactile sensor 1 firstly determine the temperature at the contact point of the object on the flexible film 2, and then analyses the chosen element that characterizes said object, chosen between the type of material, the pressure intensity and/or the position of said object in contact with the flexible film 2. Then, it compares the results with existing data in the storage means, the tactile sensor 1 deduces the other characteristics from this data.

For instance, K-means is a clustering algorithm that cluster the data into K clusters. The number of clusters is given beforehand.

It minimises the distance between each sample xi and the mean of each cluster µj. N represents the number of samples and k the number of clusters. The advantages of the K-means are its non-supervised approach and its relatively fast convergence. By using external processing, K-means could also add clusters during learning to handle new categories. Prior to the clustering, a Principal Component Analysis (PCA) could be done. In many cases, this allows better convergence during K-means clustering.

In another embodiment, the tactile sensor 1 comprises calibrating means to normalize the conductivity distribution in regard to the intensity, the position and/or the pressure intensity of the contact of the given material on the flexible film of piezo-resistive material.

The given material of said object can be chosen among this list: metal, plastic, wood, leather, skin (for instance hand wet or dry), other materials: food, biological tissue, paper, fabrics....

The tactile sensor 1 can provide a spectral profile of the given material in contact with the flexible film 2. The spectral profile is compared with the results in memory, which makes it possible to determine the nature of the material.

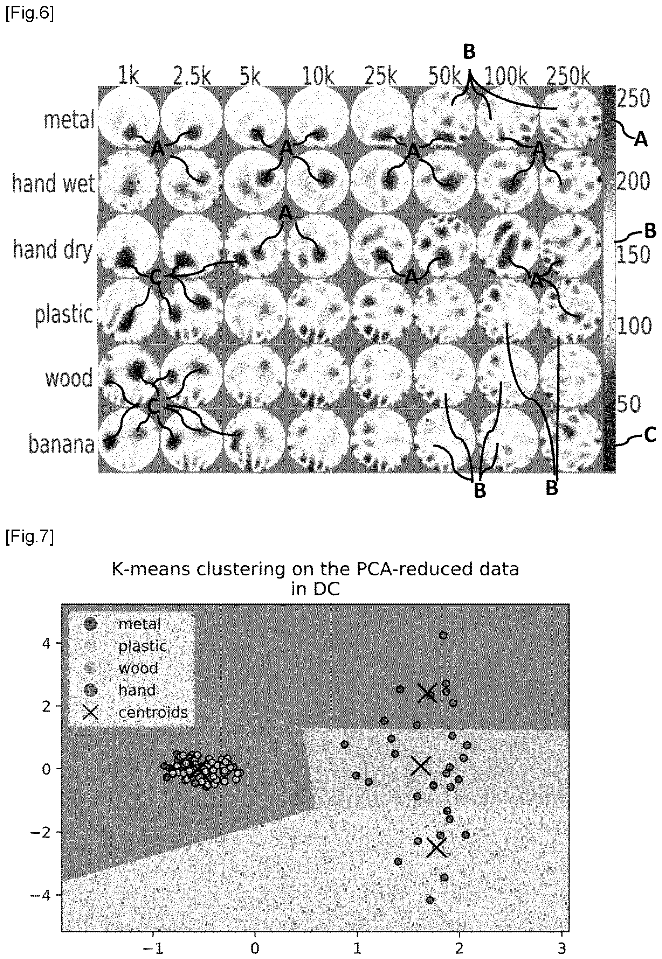

For instance, in figure 6 each material has its own spectral profile as a function of frequency from 1 kHz to 250 kHz. In this figure, the metal has a strong response at a specific point from 1 kHz up to 10 kHz, then above 25 kHz the response weakens and begins to be distributed over several zones.

For "hand wet" and "hand dry" the spectral profiles are very similar: low response at 1 kHz then a strong response of 5 kHz at 250 kHz, "hand wet" starts to react as soon as 2.5 kHz.

For plastic, wood and banana, the profiles are similar: very low response of 1 kHz and 2.5 kHz, then the response partially increases in specific areas. However, there are differences in intensity between the profiles, for example at 250 kHz, plastic has a strong response concentrated at one point, while wood has a medium response and banana has a strong response but at two different points of the plastic. All profiles have differences, allowing the tactile sensor 1 to differentiate between them.

For instance, in figures 7, 8 and 9 the responses of the materials are distributed in a graph which allows to establish characteristic (specific) zones for each material, and which can also vary according to the pressure exerted by the material:
- Figure 7 shows a dataset employed using only DC voltage as stimuli. 20 samples for each measurement were acquired and the mean was used. k-means with PCA were applied to the data and the results is shown in figure 7. Data from plastic, metal and wood are merged together, showing that it's impossible to cluster them. Thus, in comparison with multi-frequency, DC stimulation of the tactile sensor 1 is not usable to discriminate material type and one frequency is not enough to obtain good clustering.
- figure 8 shows the PCA reduced data with the application of a K-means. Each spot on the graph occurs at the same location on the tactile sensor. Plastic, metal, hand and leather were used. The same pressure was used for metal and plastic and cover the same area on the tactile sensor 1. As for leather, hand was used inside it. For several types of material, the results shows that K-means could cluster the data and differentiate the type of material in contact. The iteration number was 100. The boundaries between each cluster are well defined except for the hand. Indeed, hands tend to have greater variance than plastic or metal. This is also the case for leather. However, leather centroid cluster is farther than other clusters centroids.
- figure 9 shows the clustering with a different dataset. This is composed of three different hands and a leather glove. The results show clustering between hands and leather. Some data are not well clustered but in overall, the cluster distinguishes between hands. This could be improved to have better clustering. It shows the capability of the device and the method to cluster different types of material and even discriminate within a material type.

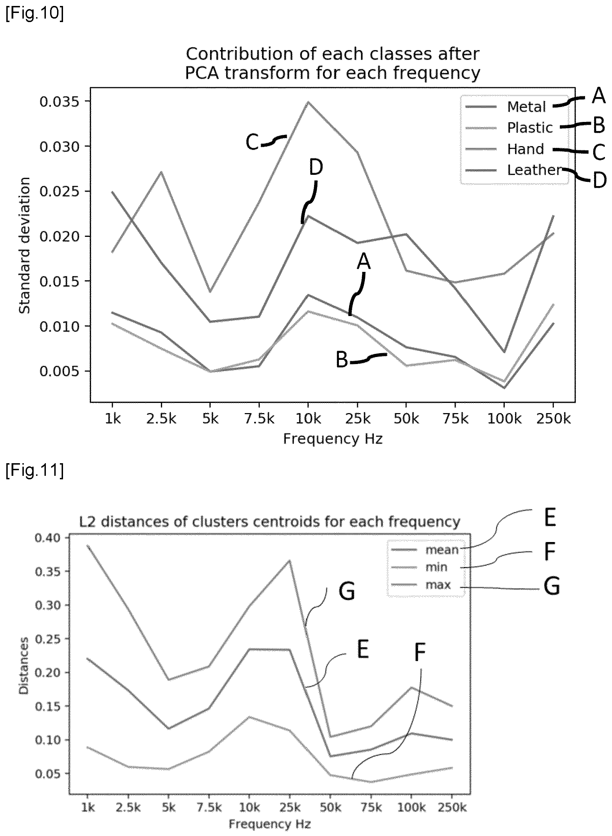

For instance, in figure 10, 11, 12, 13, 14, 15 and 16 each material has its own profile, with its variations, intensities and characteristic peaks that make the difference during a contact :
- figure 10 shows the standard deviation of each material - metal A, plastic B, hand C and leather D - after PCA transform. The data were process to contains only one frequency with the other frequencies set to zeros. For specific range of frequency, standard deviation is high for hand and leather, which was noticed with the PCA/Kmeans representation. Figure 10 shows that a certain range of frequencies that correspond to lower standard deviation might be used to get compact cluster in PCA transform. However, in order to obtain an index of how good the clustering is, another method has to be used;
- figure 11 shows the distances of centroids to each other, for each frequency. The greater the distances are, the better the cluster boundaries are. The results show higher distances for 1kHz and 10kHz to 25kHz. This corresponds to higher variances for each cluster. So the representation and the clustering are better for theses frequencies

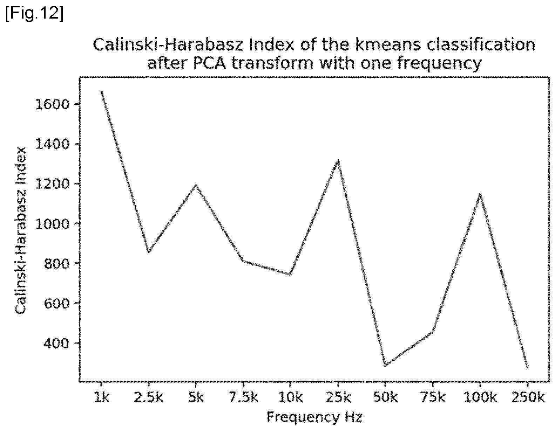

- figure 12 shows the Calinski-Harabasz index which determine how much cluster are well defined. The more the metric is high, the better the clusters are well differentiated. The PCA transform has been kept, and we use it to reconstruct a vector with only one frequency, the other frequencies are set to zero. Drops are present on figure 12, representing a lower Calinksi-Harabasz index, thus showing this frequency could not manage to represent enough data for PCA transformation. Peak frequencies could be see as carrying the most information of the whole frequency set. These peaks match peaks for distances from figure 11, which are 1kHz and 10kHz to 25kHZ.

With this data, the tactile sensor 1 is able to identify, once the temperature is firstly determined, the type of material, the location of the material but also the pressure exerted by the material during contact with the flexible film 2.

In another embodiment, the tactile sensor 1 can integrate a system. This system can be a robot or a steering wheel, a haptic human-machine interface, prosthetic hands, a biometric detector for safety, wearable sensors for IoT (Internet of Things), physical monitoring, material defect characterization.

The present invention takes advantage of the influence of frequency in Electrical Impedance Tomography. The use of several frequencies allows to discriminate material contact with a fabric stimulated by EIT. Moreover, it makes it possible to determined various parameters from an object in contact with the flexible film 2 of the tactile sensor 1. The multi-frequency analysis is important in order to reach the ability of distinguish various objects on the flexible film 2, like for example determine its material, its position, its temperature or its pressure of contact. Thus, the present invention makes it possible that it's possible to classify with K-means clustering.

The present invention surpasses the DC input clustering that were known in previous arts.

Of course, the invention is not limited to the examples that have just been described and many adjustments can be made to these examples without departing from the scope of the invention, as defined by the appended claims. In particular, the different characteristics, forms, variants and embodiments of the invention may be associated with each other in various combinations insofar as they are not incompatible or exclusive of each other, in so far as they fall within the scope of the appended claims. In particular, all the variants and embodiments described above can be combined with each other, in so far as the combination falls within the scope of the appended claims.

## Claims

1. Tactile sensor (1) to multi-modal analyse of a given object, with Electrical Impedance Tomography (EIT), comprising :
- one flexible film (2) of piezo-resistive material, intended to be in contact with the given object which deforms it and changes its electrical impedance and thus its conductivity distribution, at several positions on the flexible film (2) and for one given pressure;
- a set of electrodes (3) in contact with the flexible film (2) along at its periphery, on the edges of the flexible film (2) or within;
- a microcontroller (4);
- an electronic unit (5) connected to the microcontroller (4), and which comprises:
- electrical signals generating means which are Voltage Controlled Current Source, the electrical signals being sinusoidal alternative currents, so as to realize Electrical Impedance Tomography (EIT) with multiple frequencies which are in a frequency band that includes a frequency response of the flexible film (2), the multiple frequencies being applying simultaneously or successively, the sinusoidal signals generated being a current with a constant amplitude in the flexible film (2);
- multiplexing (6) and demultiplexing means (7) connected to electrodes (3), and configured to select: electrodes (3a) for stimulation of the flexible film (2) with sinusoidal signals, and electrodes (3b) for measurements the varying voltage in the flexible film (2) at each frequency of the frequency band, the microcontroller (4) controlling the electrical signals generating means and the multiplexing (6) and demultiplexing means (7);
- storage and computing means connected to the electrodes (3, 3a, 3b);
wherein said microcontroller (4) analyses various elements of said given object by multifrequency analysis through the calculation of the conductivity distribution in the flexible film (2), at each frequency of the frequency band, in order to compute:
- firstly, the temperature of the given object in contact with the flexible film (2); and then
- at least one element chosen in the following list comprising the nature of the given material of said given object, the position and the pressure intensity of the contact of said given object with the given material on the flexible film,
wherein elements analysed through multifrequency analysis are the temperature and at least the pressure intensity of the given object in order to deduce the given material of said given object,
and wherein the computing means having being trained by machine supervised learning and/or statistical methods for categorization from the Electrical Impedance Tomography realized with the same flexible film (2), at multiple frequencies with some training form or temperature of objects, the training form of said objects being in contact with the flexible film (2) at a same temperature or with a the same form than the given object.

2. Tactile sensor (1) according to anyone of claims 1 or 2, wherein elements analysed through multifrequency analysis are the temperature and the pressure intensity of said given object on the flexible film (2) and the position of said given object on the flexible film (2) in order to deduce the material of said given object.

3. Tactile sensor (1) according to anyone of the previous claims, wherein the microcontroller (4) is configured to:
- select a first set two adjacent electrodes (3a) for stimulation whereas the other two adjacent electrodes (3b) are selected for measurements, during a first acquisition with several frequencies, then
- repeat with all two adjacent electrodes (3, 3a, 3b) of the set selected as electrodes (3a) for stimulation, the said other two adjacent electrodes (3b) are selected for measurements, during other acquisitions which present each several frequencies.

4. Tactile sensor (1) according to anyone of the previous claims, wherein the frequency band of the electrical signals is from one kilohertz to several hundred kilos Hertz.

5. Tactile sensor (1) according to anyone of the previous claims, wherein the electrodes (3) are placed at equal distance from each other thus making the measurement homogeneous.

6. System having the tactile sensor (1) according to anyone of the previous claims.

7. System according to claim 12, wherein the system is a robot, a steering wheel, a haptic human-machine interface, prosthetic hands, a biometric detector for safety, wearable sensors for IoT (Internet of Things), physical monitoring or material defect characterization

## Patentansprüche

1. Taktiler Sensor (1) zur multimodalen Analyse eines gegebenen Objekts mittels elektrischer Impedanztomographie (EIT), umfassend:
- einen flexiblen Film (2) aus piezoresistivem Material, der dazu bestimmt ist, mit dem gegebenen Objekt in Kontakt zu stehen, das ihn verformt und seine elektrische Impedanz und somit seine Leitfähigkeitsverteilung an mehreren Positionen auf dem flexiblen Film (2) und bei einem gegebenen Druck verändert;
- einen Satz von Elektroden (3), die entlang seiner Peripherie, an den Rändern des flexiblen Films (2) oder innerhalb desselben mit dem flexiblen Film (2) in Kontakt stehen;
- einen Mikrocontroller (4);
- eine elektronische Einheit (5), die mit dem Mikrocontroller (4) verbunden ist und Folgendes umfasst:
- Mittel zur Erzeugung elektrischer Signale, die eine spannungsgesteuerte Stromquelle sind, wobei die elektrischen Signale sinusförmige Wechselströme sind, um eine elektrische Impedanztomographie (EIT) mit mehreren Frequenzen durchzuführen, die in einem Frequenzband liegen, das einen Frequenzgang des flexiblen Films (2) umfasst, wobei die mehreren Frequenzen gleichzeitig oder nacheinander angelegt werden, wobei die erzeugten sinusförmigen Signale ein Strom mit konstanter Amplitude in dem flexiblen Film (2) sind;
- Multiplexiermittel (6) und Demultiplexiermittel (7), die mit Elektroden (3) verbunden und dazu eingerichtet sind, Folgendes auszuwählen: Elektroden (3a) zur Stimulation des flexiblen Films (2) mit sinusförmigen Signalen und Elektroden (3b) zum Messen der variierenden Spannung in dem flexiblen Film (2) bei jeder Frequenz des Frequenzbands, wobei der Mikrocontroller (4) die Mittel zur Erzeugung elektrischer Signale sowie die Multiplexiermittel (6) und die Demultiplexiermittel (7) steuert;
- Speicher- und Rechenmittel, die mit den Elektroden (3, 3a, 3b) verbunden sind;
wobei der Mikrocontroller (4) verschiedene Elemente des gegebenen Objekts mittels Mehrfrequenzanalyse durch Berechnung der Leitfähigkeitsverteilung in dem flexiblen Film (2) bei jeder Frequenz des Frequenzbands analysiert, um Folgendes zu berechnen:
- erstens die Temperatur des gegebenen Objekts, das mit dem flexiblen Film (2) in Kontakt steht; und danach
- mindestens ein Element, das aus der folgenden Liste ausgewählt ist, die die Beschaffenheit des gegebenen Materials, die Position und die Druckintensität des Kontakts des gegebenen Materials umfasst,
wobei die mittels Mehrfrequenzanalyse analysierten Elemente die Temperatur und mindestens die Druckintensität des gegebenen Objekts sind, um das gegebene Material des gegebenen Objekts abzuleiten,
und wobei die Rechenmittel durch überwachtes maschinelles Lernen und/oder statistische Kategorisierungsmethoden anhand der mit demselben flexiblen Film (2) bei mehreren Frequenzen durchgeführten elektrischen Impedanztomographie mit bestimmten Trainingsformen oder Objekt-Temperaturen trainiert worden sind, wobei die Trainingsform eines Objekts mit dem flexiblen Film (2) bei derselben Temperatur oder in derselben Form wie das gegebene Objekt in Kontakt steht.

2. Taktiler Sensor (1) nach Anspruch 1, wobei die mittels Mehrfrequenzanalyse analysierten Elemente die Temperatur und die Druckintensität des gegebenen Objekts auf dem flexiblen Film (2) sowie die Position des gegebenen Objekts auf dem flexiblen Film (2) sind, um das Material des gegebenen Objekts abzuleiten.

3. Taktiler Sensor (1) nach einem der vorhergehenden Ansprüche, wobei der Mikrocontroller (4) dazu eingerichtet ist:
- während einer ersten Erfassung mit mehreren Frequenzen einen ersten Satz aus zwei benachbarten Elektroden (3a) zur Stimulation auszuwählen, während die beiden anderen benachbarten Elektroden (3b) für Messungen ausgewählt werden, und anschließend
- dies bei allen zwei benachbarten Elektroden (3, 3a, 3b) des Satzes zu wiederholen, die als Elektroden (3a) zur Stimulation ausgewählt werden, wobei die genannten beiden anderen benachbarten Elektroden (3b) während weiterer Erfassungen, die jeweils mehrere Frequenzen aufweisen, für Messungen ausgewählt werden.

4. Taktiler Sensor (1) nach einem der vorhergehenden Ansprüche, wobei das Frequenzband der elektrischen Signale von einem Kilohertz bis zu mehreren hundert Kilohertz reicht.

5. Taktiler Sensor (1) nach einem der vorhergehenden Ansprüche, wobei die Elektroden (3) in gleichem Abstand voneinander angeordnet sind, wodurch die Messung homogen wird.

6. System mit dem taktilen Sensor (1) nach einem der vorhergehenden Ansprüche.

7. System nach Anspruch 6, wobei das System ein Roboter, ein Lenkrad, eine haptische Mensch-Maschine-Schnittstelle, Prothesenhände, ein biometrischer Sicherheitsdetektor, tragbare Sensoren für IoT (Internet der Dinge), eine physische Überwachung oder eine Charakterisierung von Materialfehlern ist

## Revendications

1. Capteur tactile (1) pour l'analyse multimodale d'un objet donné, par tomographie d'impédance électrique (EIT), comprenant :
- un film flexible (2) en matériau piézorésistif, destiné à être en contact avec l'objet donné qui le déforme et modifie son impédance électrique et ainsi sa répartition de conductivité, en plusieurs positions sur le film flexible (2) et pour une pression donnée ;
- un ensemble d'électrodes (3) en contact avec le film flexible (2) le long de sa périphérie, sur les bords du film flexible (2) ou à l'intérieur de celui-ci ;
- un microcontrôleur (4) ;
- une unité électronique (5) reliée au microcontrôleur (4), et qui comprend :
- des moyens de génération de signaux électriques qui sont une source de courant commandée en tension, les signaux électriques étant des courants alternatifs sinusoïdaux, de manière à réaliser une tomographie d'impédance électrique (EIT) à fréquences multiples qui se situent dans une bande de fréquences comprenant une réponse en fréquence du film flexible (2), les fréquences multiples étant appliquées simultanément ou successivement, les signaux sinusoïdaux générés étant un courant d'amplitude constante dans le film flexible (2) ;
- des moyens de multiplexage (6) et de démultiplexage (7) reliés aux électrodes (3), et configurés pour sélectionner : des électrodes (3a) pour la stimulation du film flexible (2) avec des signaux sinusoïdaux, et des électrodes (3b) pour mesurer la tension variable dans le film flexible (2) à chaque fréquence de la bande de fréquences, le microcontrôleur (4) commandant les moyens de génération de signaux électriques et les moyens de multiplexage (6) et de démultiplexage (7) ;
- des moyens de stockage et de calcul reliés aux électrodes (3, 3a, 3b) ;
dans lequel ledit microcontrôleur (4) analyse différents éléments dudit objet donné par analyse multifréquence au moyen du calcul de la répartition de conductivité dans le film flexible (2), à chaque fréquence de la bande de fréquences, afin de calculer :
- premièrement, la température de l'objet donné en contact avec le film flexible (2) ; et ensuite
- au moins un élément choisi dans la liste suivante comprenant la nature du matériau donné, la position et l'intensité de pression du contact dudit matériau donné,
dans lequel les éléments analysés au moyen de l'analyse multifréquence sont la température et au moins l'intensité de pression dudit objet donné afin d'en déduire le matériau donné dudit objet donné,
et dans lequel les moyens de calcul ayant été entraînés par apprentissage automatique supervisé et/ou par des méthodes statistiques de catégorisation à partir de la tomographie d'impédance électrique réalisée avec le même film flexible (2), à plusieurs fréquences, avec certaines formes d'entraînement ou températures d'objets, la forme d'entraînement d'un objet étant en contact avec le film flexible (2) à une même température ou ayant une même forme que l'objet donné.

2. Capteur tactile (1) selon la revendication 1, dans lequel les éléments analysés au moyen de l'analyse multifréquence sont la température et l'intensité de pression dudit objet donné sur le film flexible (2), ainsi que la position dudit objet donné sur le film flexible (2), afin d'en déduire le matériau dudit objet donné.

3. Capteur tactile (1) selon l'une quelconque des revendications précédentes, dans lequel le microcontrôleur (4) est configuré pour :
- sélectionner un premier ensemble de deux électrodes adjacentes (3a) pour la stimulation tandis que les deux autres électrodes adjacentes (3b) sont sélectionnées pour les mesures, lors d'une première acquisition à plusieurs fréquences, puis
- répéter avec toutes les deux électrodes adjacentes (3, 3a, 3b) de l'ensemble sélectionnées en tant qu'électrodes (3a) pour la stimulation, lesdites deux autres électrodes adjacentes (3b) étant sélectionnées pour les mesures, lors d'autres acquisitions présentant chacune plusieurs fréquences.

4. Capteur tactile (1) selon l'une quelconque des revendications précédentes, dans lequel la bande de fréquences des signaux électriques s'étend d'un kilohertz à plusieurs centaines de kilohertz.

5. Capteur tactile (1) selon l'une quelconque des revendications précédentes, dans lequel les électrodes (3) sont placées à égale distance les unes des autres, rendant ainsi la mesure homogène.

6. Système comprenant le capteur tactile (1) selon l'une quelconque des revendications précédentes.

7. Système selon la revendication 6, dans lequel le système est un robot, un volant, une interface homme-machine haptique, des mains prothétiques, un détecteur biométrique destiné à la sécurité, des capteurs portables pour l'IoT (Internet des objets), une surveillance physique ou une caractérisation de défauts de matériau
